# EUROPÄISCHE PATENTSCHRIFT

(11) **EP 2 744 759 B1**
(45) Veröffentlichungstag und Bekanntmachung des Hinweises auf die Patenterteilung: **20.04.2016**
(21) Anmeldenummer: 12747883.2
(22) Anmeldetag: 09.07.2012
(51) Int. Cl.: C03B 37/012, C03B 37/027, G02B 6/02

(54) **VERFAHREN ZUR HERSTELLUNG EINER PREFORM UND PREFORM ZUM ZIEHEN EINER MIKROSTRUKTURIERTEN LICHTLEITFASER**
METHOD FOR PRODUCING A PREFORM, AND PREFORM FOR DRAWING A MICROSTRUCTURED OPTICAL FIBER
PROCEDE DE FABRICATION D'UNE PRÉFORME ET PRÉFORME DESTINÉE À L'ÉTIRAGE D'UNE FIBRE OPTIQUE MICROSTRUCTURÉE

(30) Priorität: 10.07.2011 DE 102011107511; 30.07.2011 US 201161513559 P
(43) Veröffentlichungstag der Anmeldung: 25.06.2014
(73) Patentinhaber: Fiberware Generalunternehmen für Nachrichtentechnik GmbH, 09648 Mittweida (DE)
(72) Erfinder: KUKA, Georg, 12555 Berlin (DE); HÄHNEL, Torsten, 09117 Chemnitz (DE)
(86) Internationale Anmeldenummer: PCT/EP2012/002912
(87) Internationale Veröffentlichungsnummer: WO 2013/007380

(56) Entgegenhaltungen:
- WO-A1-03/058309
- JP-A- 2004 013 173
- JP-A- 2004 102 281

## Beschreibung

Die Erfindung betrifft ein Verfahren zur Herstellung einer Preform und eine Preform zum Ziehen einer mikrostrukturierten Lichtleitfaser gemäß den Oberbegriffen der Ansprüche 1 und 6.

Mikrostrukturierte Lichtleitfasern, auch unter Photonic Crystal Fibers (PCF) als Unterklasse bekannt, sind optische Lichtwellenleiter, bei denen die Lichtführung durch einen lichtführenden Kern erfolgt, um den herum z.B. Kapillaren angeordnet sind, die jeweils längs der Lichtleitfaser verlaufen. In einer speziellen Ausführung weisen die Kapillaren im Querschnitt der Lichtleitfaser gesehen eine hexagonale Symmetrie mit dem Kern im Zentrum auf.

Mikrostrukturierte Lichtleitfasern werden aus im Wesentlichen zylinderförmigen Preformen (Vorformen) gezogen, deren Ende in einer Zieheinrichtung erhitzt wird, um die Lichtleitfaser vom erhitzten Ende der Preform abzuziehen.

Die bekannten Preformen werden aus einer Hülle (Jacket) in Form eines Glasrohrs hergestellt, wobei beispielweise ein Glaszylinder als spezielles drehsymmetrisches Kernelement koaxial in der Hülle angeordnet wird. Weiter werden in der Hülle Hohlzylinder in Form von Glasrohren um den Glaszylinder des Kernelements positioniert. Speziell können die Hohlzylinder periodisch mit hexagonaler Symmetrie um den Glaszylinder (das Kernelement) herum angeordnet sein, ihre Querschnitte also ein polygonales Muster bilden. Die Hülle, die Hohlzylinder und der Glaszylinder (das Kernelement) werden dann derart zu einer Gesamtstruktur bzw. einem Gesamtsystem verschmolzen, dass die materialfreien Räume zwischen ihnen zumindest teilweise verschwinden.

Anstelle von Hohlzylindern können auch entsprechende Vollzylinder verwendet werden.

Insbesondere aus der JP2004102281A und der JP2004013173A ist jeweils eine Preform bekannt, die ein Stützrohr mit einer zentralen hexagonalen Durchgangsöffnung aufweist. Mittig befindet sich in der Durchgangsöffnung ein Glastab (Glas-Vollzylinder), der von Glasröhren umgeben ist, welche die gesamte Durchgangsöffnung dicht gepackt ausfüllen und im Querschnitt gesehen ein entsprechendes hexagonales Muster bilden. Während des Ziehens der Lichtleitfaser wird die Preform bei einer Ausführung um ihre Längsachse gedreht, um eine Lichtleitfaser zu erzeugen, die ein korrespondierendes hexagonales Muster aufweist, welches längs der Lichtleitfaser zwar gleich beleibt, aber spiralförmig um die Faserlängsachse gedreht ist. Beim Ziehprozess verschmelzen das Stützrohr, die Glasröhren und der Glastab miteinander, wobei durch Druckbeaufschlagung dafür gesorgt wird, dass die Glasröhren nicht kollabieren. Die Glasröhren bilden in der Lichtleitfaser um den Kern herum entsprechende Kapillaren.

Die bekannten Verfahren zur Herstellung einer Preform für das Ziehen einer mikrostrukturierten Lichtleitfaser haben den Nachteil, dass die Hohl- bzw. Vollzylinder beim Verschmelzen zu einer Gesamtstruktur sehr oft brechen und keine reproduzierbare längsstabile Verschmelzung ermöglichen.

Die Aufgabe der Erfindung ist es, die starke Bruchneigung beim Verschmelzen zu beseitigen und eine reproduzierbare längstabile Verschmelzung sicherzustellen.

Die Lösung sieht bezogen auf das Verfahren vor, dass die Subelemente und das Kernelement ein Bündel bilden, dessen Muster polygonal ist und das um einen vorgegebenen Winkel um die Bündellängsachse verdrillt wird, wobei das Muster längs der Preform erhalten bleibt.

Mit Vorteil wird vorgeschlagen, dass die Preform mit dem verdrillten Bündel auf eine vorgegebene Länge gestreckt wird und dass die gestreckte Preform selbst als Subelement verwendet wird.

Vorteilhafterweise wird das Bündel an einem Ende versiegelt und dann in einem Hohlzylinder aus Glas als zylindrische Hülle koaxial angeordnet.

Zweckmäßigerweise wird das Kernelement nicht mitverdrillt, wenn es die Form eines Zylinders hat, also zylindersymmetrisch ist.

Die Lösung sieht bezogen auf die Preform vor, dass die Substrukturelemente in Form von Hohlzylindern aus Glas oder Vollzylindern aus dotiertem Glas um die Längsachse des Kernbereichs herum helixförmig angeordnet sind, wobei das Muster bis auf die helixformbedingte Drehung jeweils gleich ist, so dass das Muster an dem einen Ende der Preform gegenüber dem Muster an dem anderen Ende der Preform lediglich um einen Winkel gedreht ist.

Mit Vorteil wird vorgeschlagen, dass zumindest einige der Substrukturelemente durch Strecken einer solchen Preform auf eine vorgegebene Länge gebildet sind.

Die Erfindung wird nachfolgend anhand eines Ausführungsbeispiels näher beschrieben. Es zeigen:
- Fig. 1: den Querschnitt einer Preform,
- Fig. 2: einen Querschnitt durch die Preform gemäß Fig. 1 vor dem Verschmelzen und
- Fig. 3: die verdrillten Hohlzylinder einschließlich Kernelement der Preform gemäß Fig. 2.

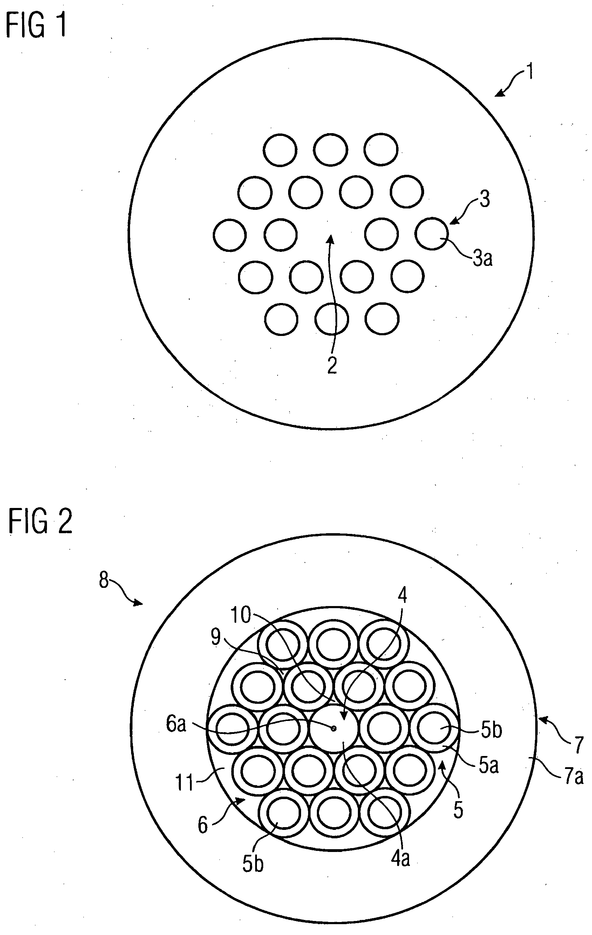

Fig. 1 zeigt den Querschnitt einer Preform 1 zur Herstellung einer mikrostrukturierten Lichtleitfaser. Die Preform 1 hat die äußere Form eines geraden Zylinders mit einem koaxialen Kernbereich 2, um den herum Substrukturelemente 3 in Form von zylindrischen Hohlräumen 3a helixförmig angeordnet sind. Die zylindrischen Hohlräume 3a sind periodisch mit hexagonaler Symmetrie angeordnet. Es sind selbstverständlich auch andere Anordnungen und Symmetrien möglich. Die zylindrischen Hohlräume 3a können alternativ auch aus dotiertem Vollmaterial bestehen, also strangförmig und ebenfalls helixförmig angeordnet sein.

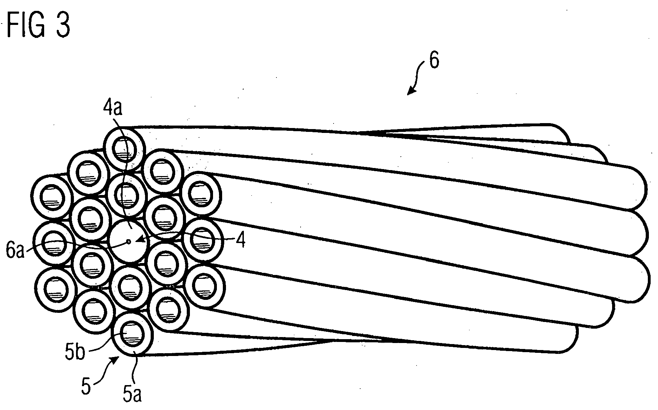

Nachfolgend wird ein Verfahren zur Herstellung der Preform 1 anhand von Fig. 2 beschrieben, welche einen Querschnitt durch die Preform 1 vor dem Verschmelzen zeigt. Ausgangspunkt des Verfahrens ist ein Vollzylinder (Kern-Vollzylinder 4a) aus Glas als drehsymmetrisches Kernelement 4, um das Hohlzylinder 5a als Subelemente 5 angeordnet werden. Das Kernelement 4 kann alternativ auch aus mehreren Vollzylindern und dergleichen bestehen, also beispielsweise aus drei Vollzylindern. Das aus dem Kern-Vollzylinder 4a und den Hohlzylindern 5a gebildete Bündel 6 mit der Bündellängsachse 6a wird vorgereinigt und an einem Ende versiegelt, vorzugsweise verschmolzen. Dann werden die Hohlzylinder 5a um einen vorgegebenen Winkel verdrillt, d.h. die longitudinalen Achsen der Hohlzylinder 5a zur Zylinderachse des Kern-Vollzylinders 4a entsprechend ausgerichtet (gestackt). Die Zylinderachse des Kern-Vollzylinders 4a ist allgemein die Symmetrielängsachse des drehsymmetrischen Kernelements, die hier mit der Bündellängsachse 6a zusammenfällt. Das verdrillte Bündel 6 ist in Fig. 3 dargestellt. Weist das Kernelement 4 nicht nur einen sondern beispielsweise mehrere Vollzylinder auf, ist es also nicht zylindersymmetrisch, so werden die Hohlzylinder 5a zusammen mit dem Kernelement 4 um einen vorgegebenen Winkel verdrillt. Bei nur einem Vollzylinder als Kernelement 4 kann auf das Verdrillen des einen Kern-Vollzylinders 4a verzichtet werden; er 4a kann aber auch mitverdrillt werden. Das andere Ende des Bündels 6 wird nach dem Verdrillen nicht versiegelt und so belassen wie es ist.

Dieses einseitig versiegelte Bündel 6 (Stack) wird dann in einen weiteren Hohlzylinder 7a aus Glas als zylindrische Hülle 7 (Jacket) geschoben, wobei es koaxial in der Hülle 7 angeordnet wird.

Das versiegelte Ende dieser Gesamtanordnung 8 wird an einen Druckadapter angeflanscht, um die Räume 9 zwischen den Hohlzylindern 5a, zwischen den Hohlzylindern 5a und dem Kern-Vollzylinder 4a sowie zwischen den Hohlzylindern 5a und der Hülle 7 mit einem Unterdruck zu versehen. An die Hohlräume 5b der Hohlzylinder 5a wird kein Druck (also auch kein Unterdruck) angelegt.

Die Gesamtanordnung 8 wird auf Hochtemperatur erhitzt und mit einem hochreinen Prozessgas gespült und auf diese Weise gereinigt. Nach Abschluss des Reinigungsprozesses folgt ein Fixierungsprozess, bei dem die Gesamtanordnung 8 am nichtversiegelten Ende beginnend bis zum versiegelten Ende lokal verschmolzen wird. Dabei wird die Gesamtanordnung 8 jeweils lokal über den Erweichungspunkt (Transformationspunkt) der verwendeten (Glas-)Materialien erwärmt, was im Ziehofen erfolgt, wobei die Gesamtanordnung 8 über ihre gesamte Länge durch Längsverschieben im Ziehofen durch dessen Erwärmungszone lokal erwärmt und verschmolzen wird. Bei der Fixierung bzw. dem Verschmelzen verschwinden die materialfreien Räume 9, 10, 11 zwischen den Hohlzylindern, zwischen den Hohlzylindern und dem Kern-Vollzylinder sowie zwischen den Hohlzylindern und der Hülle aufgrund des Unterdrucks vollständig. Es ist aber auch möglich, das Verschmelzen so auszuführen, dass die materialfreien Räume 9, 10, 11 zumindest teilweise erhalten bleiben. Die Längsachse 6a des Kernbereichs 2 ist die ursprüngliche Bündellängsachse 6a.

Nach dem Fixierungsprozess wird die Versiegelung beseitigt und die Preform 1 erneut mit einem Druckadapter versehen. Nun schließt sich das Verziehen der Preform 1 zu einer mikrostrukturierten Lichtleitfaser an, wobei die zylindrischen Hohlräume 5b der Hohlzylinder 5a mit einem Überdruck beaufschlagt werden, um ein Kollabieren der Hohlräume 5b zu verhindern, welche dadurch in der Lichtleitfaser entsprechende Kapillaren bilden, die ebenfalls helixförmig um den Faserkern verlaufen.

## Patentansprüche

1. Verfahren zur Herstellung einer Preform (1) zum Ziehen einer mikrostrukturierten Lichtleitfaser,
bei dem, längs der Preform verlaufend, ein Kernelement (4) und mehrere Subelemente (5) angeordnet werden, die über den Transformationspunkt seiner Materialien hinaus erwärmt und zumindest teilweise derart miteinander verschmolzen werden, dass die materialfreien Räume (9, 10, 11) zwischen den Subelementen (5), zwischen den Subelementen (5) und dem Kernelement (4) sowie zwischen den Subelementen (5) und der Hülle (7) zumindest teilweise verschwinden,
**dadurch gekennzeichnet,**
**dass** die Subelemente (5) in Form von Hohlzylindern (5a) aus Glas oder Vollzylindern aus dotiertem Glas und das Kernelement (4) ein Bündel (6) bilden, dessen Muster polygonal ist und das um einen vorgegebenen Winkel um die Bündellängsachse (6a) verdrillt wird, wobei das Muster längs der Preform (1) erhalten bleibt.

2. Verfahren bei Anspruch 1,
**dadurch gekennzeichnet,**
**dass**, die Hülle (7), die Subelemente (5) und das Kernelement (4) zur Reinigung vor dem Verschmelzen erhitzt und mit einem Gas gespült werden.

3. Verfahren nach Anspruch 1 oder 2,
**dadurch gekennzeichnet,**
**dass** die Preform (1) mit dem verdrillten Bündel (6) auf eine vorgegebene Länge gestreckt wird und als Subelement (5) in dem Verfahren zur Herstellung einer Preform (1) verwendet wird.

4. Verfahren nach Anspruch 1 - 3,
**dadurch gekennzeichnet,**
**dass** das Bündel (6) an einem Ende versiegelt und dann in einem Hohlzylinder (7a) aus Glas als zylindrische Hülle (7) koaxial angeordnet wird.

5. Verfahren nach Anspruch 1 - 4,
dass das Kernelement (4) nicht mitverdrillt wird, wenn es die Form eines Zylinders hat.

6. Preform (1) zum Ziehen einer mikrostrukturierten Lichtleitfaser in einer Zieheinrichtung, in der ein Preformende erhitzt und die Lichtleitfaser vom erhitzten Preformende abgezogen wird,
mit einem Kernbereich (2) und mehreren Substrukturelementen (3), die längs der Preform (1) verlaufen und zumindest teilweise miteinander verschmolzen sind, wobei deren Querschnitte jeweils ein Muster bilden,
**dadurch gekennzeichnet,**
**dass** die Substrukturelemente (3) in Form von Hohlzylindern (5a) aus Glas oder Vollzylindern aus dotiertem Glas um die Längsachse (6a) des Kernbereichs (2) herum helixförmig angeordnet sind, wobei das Muster bis auf die helixformbedingte Drehung jeweils gleich ist.

7. Preform nach Anspruch 6,
**dadurch gekennzeichnet,**
**dass** zumindest einige der Substrukturelemente (3) durch Strecken einer solchen Preform (1) auf eine vorgegebene Länge gebildet sind.

## Claims

1. Method for constructing a preform (1) for pulling a microstructured optical fibre where a core element (4) and several sub-elements (5) are arranged along the preform, that are heated beyond the transformation point of its materials and, at least in part, so fused together that the material-free spaces (9, 10, 11) between the sub-elements(5) and the core element (4) and between the sub-elements (5) and the sheath (7) at least partially disappear,
**characterized in**
**that** the sub-elements (5) in the shape of hollow cylinders (5a) of glass or solid cylinders of doped glass and the core element (4) form a bundle (6) whose pattern is polygonal and which is twisted at a preset angle around the bundle's longitudinal axis (6a) wherein the pattern is retained along the length of the preform (1).

2. Method of claim 1,
**characterized in that** the sheath (7), the sub-elements (5) and the core element (4) are heated and purged with a gas for cleaning purposes before the fusing is performed.

3. Method according to claim 1 or claim 2,
**characterized in**
**that** the preform (1) with the twisted bundle (6) is stretched to a specified length and used as sub-element (5) in the method for the manufacture of a preform (1).

4. Method according to claims 1 - 3,
**characterized in**
**that** the bundle (6) is sealed at one end and then arranged coaxially in a hollow glass cylinder (7a) as a cylindrical sheath (7).

5. Method according to claims 1 - 4,
that the core element (4) is not twisted with the other elements when it has the shape of a cylinder.

6. Preform (1) for the pulling of a microstructured optical fibre in a pulling device in which one preform end is heated and the optical fibre pulled off the heated preform end,
with a core region (2) and several sub-structure elements (3) that run along the length of the preform (1) and are fused together, at least partially, wherein their cross-sections form a pattern in each case,
**characterized in**
**that** the sub-structure elements (3) in the form of hollow glass cylinders (5a) or solid cylinders of doped glass are arranged in a helical form around the longitudinal axis (6a) of the core region (2), wherein the pattern is the same in each case, with the exception of the rotation due to the helical form.

7. Preform according to claim 6,
**characterized in**
**that** at least some of the sub-structure elements (3) are formed by the stretching of such a preform (1) to a specified length.

## Revendications

1. Procédé de fabrication d'une préforme (1) pour l'étirage d'une fibre optique microstructurée, où sont disposés un élément d'âme (4) et plusieurs sous-éléments (5) s'étendant le long de la préforme, lesquels sont chauffés au-delà du point de transformation de leurs matériaux et au moins partiellement fusionnés de manière à faire disparaître au moins en partie les espaces (9, 10, 11) exempts de matériau entre les sous-éléments (5), entre les sous-éléments (5) et l'élément d'âme (4) ainsi qu'entre les sous-éléments (5) et la gaine (7),
**caractérisé**
**en ce que** les sous-éléments (5) ayant la forme de cylindres creux (5a) en verre ou de cylindres massifs en verre dopé et l'élément d'âme (4) forment un faisceau (6) dont le contour est polygonal et qui est vrillé autour de l'axe longitudinal (6a) du faisceau suivant un angle défini, le contour restant maintenu au long de la préforme (1).

2. Procédé selon la revendication 1,
**caractérisé**
**en ce que** la gaine (7), les sous-éléments (5) et l'élément d'âme (4) sont chauffés avant fusion pour nettoyage et rincés avec un gaz.

3. Procédé selon la revendication 1 ou la revendication 2, **caractérisé**
**en ce que** la préforme (1) est étirée à une longueur définie avec le faisceau (6) vrillé et utilisée comme sous-élément (5) dans le procédé de fabrication d'une préforme (1).

4. Procédé selon les revendications 1 à 3,
**caractérisé**
**en ce que** le faisceau (6) est scellé à une extrémité puis coaxialement disposé dans un cylindre creux (7a) en verre en tant que gaine (7) cylindrique.

5. Procédé selon les revendications 1 à 4,
**caractérisé**
**en ce que** l'élément d'âme (4) n'est pas vrillé conjointement s'il a la forme d'un cylindre.

6. Préforme (1) pour l'étirage d'une fibre optique dans un dispositif d'étirage, où une extrémité de préforme est chauffée et la fibre optique extraite de l'extrémité de préforme chauffée,
avec une zone d'âme (2) et plusieurs sous-éléments structurels (3) s'étendant le long de la préforme (1) et étant au moins partiellement fusionnés, les sections de ceux-ci formant un contour respectif,
**caractérisée**
**en ce que** les sous-éléments structurels (3) ayant la forme de cylindres creux (5a) en verre ou de cylindres massifs en verre dopé sont disposés en hélice autour de l'axe longitudinal (6a) de la zone d'âme (2), le contour restant le même à l'exception de la rotation en hélice.

7. Préforme selon la revendication 6,
**caractérisé**
**en ce qu'**au moins quelques-uns des sous-éléments structurels (3) sont formés par étirage d'une telle préforme (1) à une longueur définie.
